# EUROPEAN PATENT APPLICATION

(11) **EP 3 232 714 A1**
(43) Date of publication of application: **18.10.2017**
(21) Application number: 14907996.4
(22) Date of filing: 09.12.2014
(51) Int. Cl.: H04W 48/16

(54) **CELL RESELECTION METHOD AND APPARATUS, AND COMMUNICATION SYSTEM**

(71) Applicant: Fujitsu Limited, Kawasaki-shi, Kanagawa 211-8588 (JP)
(72) Inventor: WU, Lianhai, Beijing 100025 (CN); XU, Haibo, Beijing 100025 (CN); ZHOU, Hua, Beijing 100025 (CN)
(74) Representative: Haseltine Lake LLP
(86) International application number: PCT/CN2014/093394
(87) International publication number: WO 2016/090561

(57) **Abstract**

A cell reselection method and apparatus, and a communication system. The cell reselection method includes: determining, by user equipment, a cell of signal strength greater than or equal to a predefined threshold value and supporting the ProSe; and reselecting the cell by the user equipment. By means of the embodiments of this disclosure, even though a cell with the greatest signal strength does not support ProSe, the user equipment can also reselect a new cell to perform ProSe.

## Description

### Technical Field

This disclosure relates to the field of communication technologies, and in particular to a cell reselection method and apparatus and a communication system.

### Background

A proximity-based service (ProSe), which may also be referred to as a device to device (D2D) service, is widely studied at present. ProSe communication may refer to that communication of data packets is performed via a communication link directly established between user equipment (UE, such as UE 1 and UE 2), without via a core network and a base station. Before the ProSe communication is performed, ProSe discovery process is usually performed. For example, before UE 1 transmits information to UE 2 in ProSe communication manner, it needs first to discover whether UE 2 is in proximity.

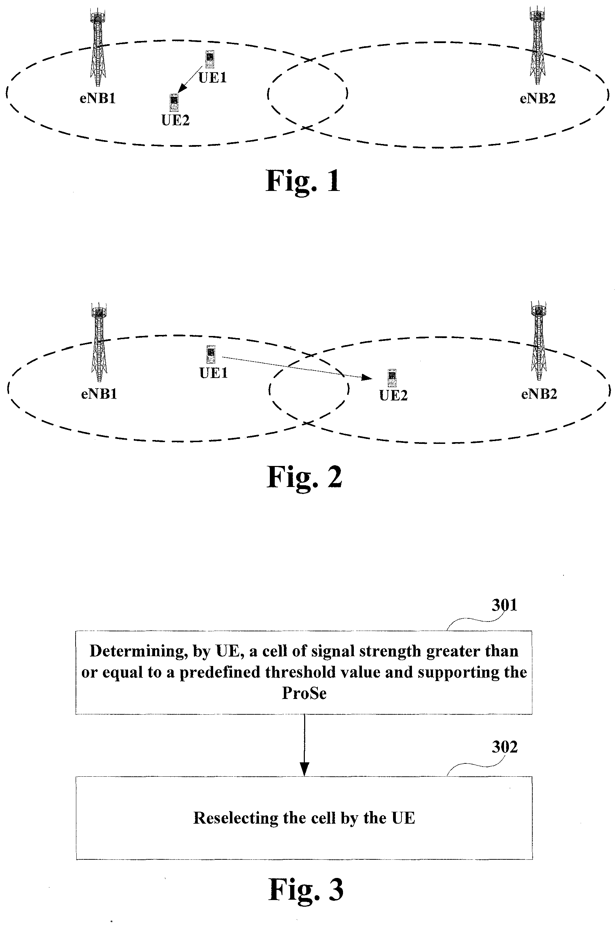

FIG. 1 is a schematic diagram of ProSe discovery or ProSe communication in the prior art, in which a case where ProSe discovery is performed or ProSe communication is established by two pieces of UE (such as UE 1 and UE 2) belonging to the same base station (such as eNB 1) is shown. FIG. 2 is another schematic diagram of ProSe discovery or ProSe communication in the prior art, in which a case where ProSe discovery is performed or ProSe communication is established by two pieces of UE belonging to different base stations (such as eNB 1 and eNB 2) is shown.

As for the ProSe discovery process of the UE, when the UE is triggered to start the discovery process (such as transmitting a discovery signal or receiving a discovery signal), the UE will inform the base station that it will perform ProSe discovery and require for allocation of ProSe discovery resources. After receiving the request from the UE, the base station will configure the UE with ProSe discovery resources. The base station may possibly configure the UE with ProSe discovery resources via dedicated signaling, and may also possibly notify the UE to directly use ProSe discovery resources broadcasted by a system information block (SIB).

Likewise, when the UE is triggered to perform ProSe communication, the UE will inform the base station that it will perform ProSe communication and require allocation of ProSe communication resources. After receiving the request from the UE, the base station will configure the UE with ProSe communication resources. The base station may possibly configure the UE with ProSe communication resources via dedicated signaling, and may also possibly notify the UE to directly use ProSe communication resources broadcasted by an SIB.

It should be appreciated that the above description of the background is merely provided for clear and complete explanation of this disclosure and for easy understanding by those skilled in the art. And it should not be understood that the above technical solution is known to those skilled in the art as it is described in the background of this disclosure.

### Summary

Currently, it is taken into account in a scenario that UE may only perform ProSe on a carrier (for example, marked by *F*1), but not all cells on the carrier *F*1 support ProSe, that is, some of cells on the carrier *F*1 do not support ProSe. When UE camps in a cell not supporting ProSe, if the UE is triggered by a high layer to perform ProSe, the UE needs to reselect another cell which supports ProSe.

It is taken into account in another scenario that UE camps on a carrier which does not support ProSe (which may be marked by *ƒ*2), and if the UE is triggered to perform ProSe, it must reselect another carrier which supports ProSe (which may be marked by *ƒ*1); in which, a case where the carrier *ƒ*1 and the carrier *ƒ*2 are of the same priority is taken into account.

However, it was found by the inventors that for the above two scenarios, in an existing cell reselection mechanism, according to a result of measurement of signal strength, the UE will rank all cells satisfying the S rule on carriers of the same priority. The so-called S rule refers to the rule that signal strength of a cell exceeds a predefined threshold value. Then, the UE will reselect another cell with maximum signal strength according to the ranking result. If the cell with maximum signal strength does not support ProSe, the UE may not reselect a new cell to perform ProSe.

Embodiments of this disclosure provide a cell reselection method and apparatus and a communication system, in which even though a cell with maximum signal strength does not support ProSe, UE may reselect a new cell to perform ProSe.

According to a first aspect of the embodiments of this disclosure, there is provided a cell reselection method, applicable to UE triggered to perform ProSe, the cell reselection method including:
determining, by the UE, a cell of signal strength greater than or equal to a predefined threshold value and supporting the ProSe; and
reselecting the cell by the UE.

According to a second aspect of the embodiments of this disclosure, there is provided a cell reselection apparatus, configured in UE triggered to perform ProSe, the cell reselection apparatus including:
a cell determining unit configured to determine a cell of signal strength greater than or equal to a predefined threshold value and supporting the ProSe; and
a cell reselecting unit configured to enable the UE to reselect the cell.

According to a third aspect of the embodiments of this disclosure, there is provided a communication system, including:
UE configured to, when being triggered to perform ProSe, determine a cell of signal strength greater than or equal to a predefined threshold value and supporting the ProSe, and reselect the cell.

According to another aspect of the embodiments of this disclosure, there is provided a computer readable program, which, when executed in UE, will cause a computer unit to carry out the cell reselection method as described above in the UE.

According to a further aspect of the embodiments of this disclosure, there is provided a computer readable medium, including a computer readable program, which will cause a computer unit to carry out the cell reselection method as described above in UE.

An advantage of the embodiments of this disclosure exists in that when a cell supports ProSe and signal strength of the cell is greater than or equal to a predefined threshold value, UE reselects the cell. Hence, even though a cell with the greatest signal strength does not support ProSe, the UE can also reselect a new cell to perform ProSe.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

### Brief Description of the Drawings

Many aspects of the disclosure can be better understood with reference to the following drawings. The components in the drawings are not necessarily to scale, emphasis instead being placed upon clearly illustrating the principles of this disclosure. To facilitate illustrating and describing some parts of the disclosure, corresponding portions of the drawings may be exaggerated or reduced.

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.
FIG. 1 is a schematic diagram of ProSe discovery or ProSe communication in the prior art;
FIG. 2 is another schematic diagram of ProSe discovery or ProSe communication in the prior art;
FIG. 3 is a flowchart of the cell reselection method of Embodiment 1 of this disclosure;
FIG. 4 is a flowchart of the cell reselection method of Embodiment 2 of this disclosure;
FIG. 5 is a flowchart of the cell reselection method of Embodiment 3 of this disclosure;
FIG. 6 is a schematic diagram of a structure of the cell reselection apparatus of Embodiment 4 of this disclosure;
FIG. 7 is a schematic diagram of a structure of the UE of Embodiment 4 of this disclosure;
FIG. 8 is a schematic diagram of a structure of the cell determining unit of Embodiment 5 of this disclosure; and
FIG. 9 is a schematic diagram of a structure of the communication system of Embodiment 7 of this disclosure.

### Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

### Embodiment 1

An embodiment of this disclosure provides a cell reselection method, applicable to UE triggered to perform ProSe. FIG. 3 is a flowchart of the cell reselection method of Embodiment 1 of this disclosure. As shown in FIG. 3, the cell reselection method includes:
step 301: determining, by UE, a cell of signal strength greater than or equal to a predefined threshold value and supporting the ProSe; and
step 302: reselecting the cell by the UE.

In this embodiment, the cell used for reselection supports the ProSe, and the signal strength of the cell is greater than or equal to the predefined threshold value. Hence, even though a cell with the greatest signal strength does not support ProSe, the UE can also reselect a new cell to perform ProSe.

In this embodiment, information on whether the cell supports ProSe may be learnt by the UE from system information transmitted by a base station. Furthermore, acquisition of the signal strength of the cell and determination of the predefined threshold value may be performed by using related methods in the relevant art.

It can be seen from the above embodiment that when a cell supports ProSe and signal strength of the cell is greater than or equal to a predefined threshold value, UE reselects the cell. Hence, even though a cell with the greatest signal strength does not support ProSe, the UE can also reselect a new cell to perform ProSe.

That is, when the UE performs cell reselection, ranking may be neglected, and as long as the cell satisfies the S rule, the UE may reselect the cell; and signal strength of cells supporting the ProSe may be ranked, and the UE may reselect a cell with the greatest signal strength and supporting the ProSe.

### Embodiment 2

On the basis of Embodiment 1, this embodiment further describes the cell reselection method.

In this embodiment, before determining the cell for reselection, the UE is in an idle state and camps in a cell (such as a cell 1) not supporting proximity-based service (such as ProSe discovery or ProSe communication). For example, a carrier where the cell is located may be marked by *F*1*,* and one or more cells on the carrier *F*1 support the ProSe (for example, only a part of the cells support the ProSe).

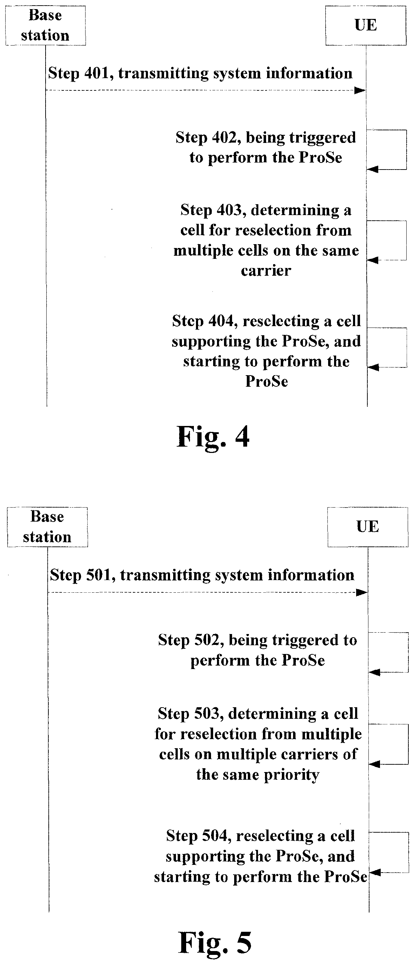

FIG. 4 is a flowchart of the cell reselection method of the embodiment of this disclosure. As shown in FIG. 4, the cell reselection method includes:
step 401: receiving, by UE, system information transmitted by a base station;
the system information may include: information on a cell supporting the ProSe and/or information on a carrier supporting the ProSe, such as whether a present cell (such as cell 1) supports the ProSe, or whether neighboring cells (such as cell 2 and cell 3) support the ProSe;
step 402: triggering the UE to perform the ProSe;
for example, the UE may possibly be triggered by a high layer to transmit ProSe discovery signal, receive ProSe discovery signal, or perform ProSe communication, etc.; however, this disclosure is not limited thereto, and it may be any manner for triggering ProSe in the relevant art;
step 403: determining a cell for reselection from multiple cells of the same carrier by the UE;
in an implementation, for the multiple cells on the same carrier, when a cell supports the ProSe and its signal strength is greater than or equal to the predefined threshold value, the cell may be determined as the cell for performing reselection;
for example, all cells on the carrier *F*1 include cell 1, cell 2, cell 3, cell 4, cell 5, and cell 6, etc.; in which, cells with signal strength greater than the predefined threshold value and supporting the ProSe include cell 2, cell 5, and cell 6, and if the UE is triggered to perform the ProSe, the UE will reselect any one of cell 2, cell 5, and cell 6;
in this implementation, the UE will reselect a cell supporting the ProSe as long as signal strength of the cell is greater than a pre-given threshold value, that is, the UE may neglect a rank rule in performing cell reselection. Hence, it may reselect a new cell to perform the ProSe;
in another implementation, for multiple cells on the same carrier, the cells are classified into cells supporting the ProSe and cells not supporting the ProSe; for the one or more cells supporting the ProSe, the cells of signal strength greater than or equal to the predefined threshold value are ranked in a sort of signal strength; and the reselected cell is determined according to a ranking result;
for example, a ranked cell with maximum signal strength may be determined as the reselected cell; however, this disclosure is not limited thereto; for example, a cell of secondarily maximum signal strength may be determined as the reselected cell;
for example, all cells on carrier *F*1 are divided into two classes, which may as well be marked by class A and class B; cells of class A support the ProSe (for example, the cells of class A include cell 2, cell 4, cell 5, and cell 6, etc.), and cells of class B do not support the ProSe (for example, the cells of class B include cell 1, and cell 3, etc.);
thereafter, the UE ranks all cells in class A of signal strength greater than a threshold value (for example, the cells include cell 2, cell 5, and cell 6) in a sort of signal strength, and a ranking result is, for example, cell 5, cell 2, and cell 6; hence, if the UE is triggered to perform the ProSe, the UE will reselect cell 5 with maximum signal strength in the cells of class A;
in this implementation, multiple cells of signal strength greater than the predefined threshold value and supporting the ProSe are ranked, and cell reselection is performed according to the ranking result; hence, the UE may reselect a new cell of relatively good signal strength for performing the ProSe;
step 404: reselecting a cell supporting the ProSe by the UE, and starting to perform the ProSe.

It can be seen from the above embodiment that in the case where the UE is in an idle state and camps in a cell not supporting the ProSe and only a part of cells on the same carrier support the ProSe, if the UE is triggered to perform the ProSe, when a cell supports the ProSe and signal strength of the cell is greater than or equal to the predefined threshold value, the UE reselects the cell. Hence, even though a cell with the greatest signal strength does not support ProSe, the UE can also reselect a new cell to perform ProSe.

### Embodiment 3

On the basis of Embodiment 1, this embodiment further describes the cell reselection method.

In this embodiment, before determining the cell for reselection, the UE is in an idle state and camps in a cell (such as a cell 1) not supporting proximity-based service (such as ProSe discovery or ProSe communication). For example, a carrier where the cell is located may be marked *by ƒ*2*,* and the carrier *ƒ*2 does not support the ProSe; another carrier (marked by *ƒ*1) supports the ProSe; and in a cell reselection rule, both *ƒ*1 and *ƒ*2 are of the same priority. On carrier *ƒ*1, there may exist only a part of cells supporting the ProSe, or all cells may support the ProSe.

FIG. 5 is a flowchart of the cell reselection method of the embodiment of this disclosure. As shown in FIG. 5, the cell reselection method includes:
step 501: receiving, by UE, system information transmitted by a base station;
the system information may include: information on a cell supporting the ProSe and/or information on a carrier supporting the ProSe, such as whether a present cell (such as cell 1) supports the ProSe, or whether neighboring cells (such as cell 2 and cell 3) support the ProSe, and/or information on which carriers support the ProSe, and which carriers do not support the ProSe, etc.;
step 502: triggering the UE to perform the ProSe;
for example, the UE may be triggered by a high layer to transmit ProSe discovery signal, receive ProSe discovery signal, or perform ProSe communication, etc.;
step 503: determining a cell for reselection from multiple cells on multiple carriers of the same priority by the UE;
in an implementation, for the multiple cells on the multiple carriers of the same priority, when a cell supports the ProSe and its signal strength is greater than or equal to the predefined threshold value, the cell is determined as the cell for performing reselection;
for example, all cells on the carrier *ƒ*2 include cell 1, cell 2, and cell 3, etc., and all cells on the carrier *ƒ*1 include cell 4, cell 5, and cell 6; in which, cells with signal strength greater than the predefined threshold value and supporting the ProSe include cell 5 and cell 6, and if the UE is triggered to perform the ProSe, the UE will reselect either one of cell 5 and cell 6;
in this implementation, the UE will reselect a cell supporting the ProSe as long as signal strength of the cell is greater than a pre-given threshold value, that is, the UE may neglect a rank rule in performing cell reselection. Hence, it may reselect a new cell to perform the ProSe;
in another implementation, for the multiple cells on the multiple carriers of the same priority, the cells are classified into cells supporting the ProSe and cells not supporting the ProSe; for the cells supporting the ProSe, the cells of signal strength greater than or equal to the predefined threshold value are ranked in a sort of signal strength; and the cell for reselection is determined according to the ranking result;
for example, a ranked cell with maximum signal strength may be determined as the reselected cell; however, this disclosure is not limited thereto; for example, a cell of secondarily maximum signal strength may be determined as the reselected cell;
for example, all cells on carrier *ƒ*1 and carrier *ƒ*2 are divided into two classes, which may be marked by class A and class B; cells of class A support the ProSe (for example, the cells of class A include cell 4, cell 5, and cell 6, etc.), and cells of class B do not support the ProSe (for example, the cells of class B include cell 1, cell 2, and cell 3, etc.);
thereafter, the UE ranks all cells in the class A of signal strength greater than a threshold value (for example, the cells include cell 5 and cell 6) in a sort of signal strength, and the ranking result is, for example, cell 6, and cell 5; hence, if the UE is triggered to perform the ProSe, the UE will reselect cell 6 with maximum signal strength in the cells of class A;
in this implementation, multiple cells of signal strength greater than the predefined threshold value and supporting the ProSe are ranked, and cell reselection is performed according to the ranking result; hence, the UE may reselect a new cell of relatively good signal strength for performing the ProSe;
step 504: reselecting a cell supporting the ProSe by the UE, and starting to perform the ProSe.

It can be seen from the above embodiment that in the case where the UE is in an idle state and camps in a cell not supporting the ProSe and only a part of cells on multiple carriers of the same priority support the ProSe, if the UE is triggered to perform the ProSe, when a cell supports the ProSe and signal strength of the cell is greater than or equal to the predefined threshold value, the UE reselects the cell. Hence, even though a cell with the greatest signal strength does not support ProSe, the UE can also reselect a new cell to perform ProSe.

### Embodiment 4

An embodiment of this disclosure provides a cell reselection apparatus, configured in UE triggered to perform ProSe. The embodiment of this disclosure corresponds to the cell reselection method in Embodiment 1, with identical contents being not going to be described herein any further.

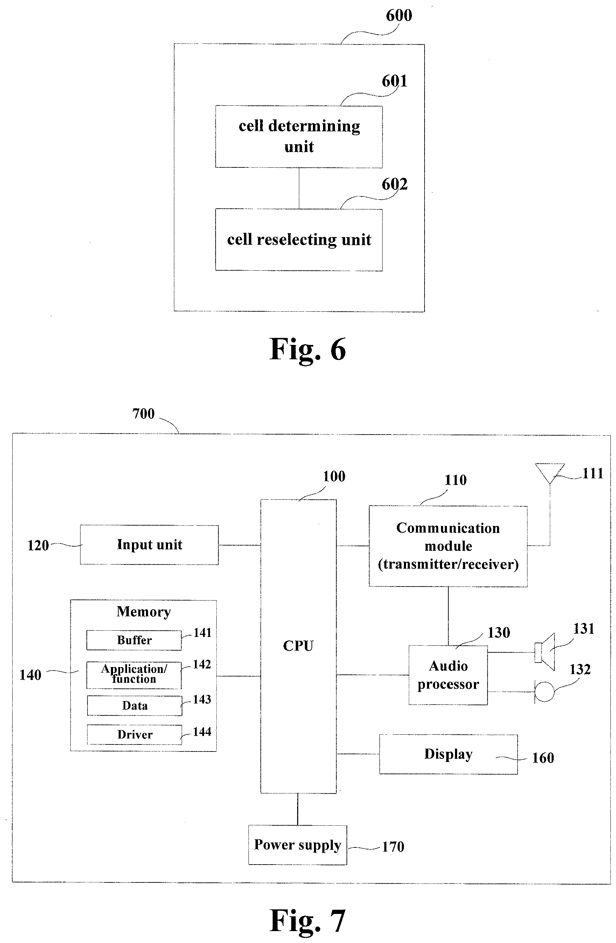

FIG. 6 is a schematic diagram of a structure of the cell reselection apparatus of the embodiment of this disclosure. As shown in FIG. 6, the cell reselection apparatus 600 includes:
a cell determining unit 601 configured to determine a cell of signal strength greater than or equal to a predefined threshold value and supporting the ProSe; and
a cell reselecting unit 602 configured to enable the UE to reselect the cell.

The embodiment of this disclosure further provides UE, configured with the above-described cell reselection apparatus 600.

FIG. 7 is a schematic diagram of a structure of the UE of the embodiment of this disclosure. As shown in FIG. 7, the UE 700 may include a central processing unit (CPU) 100 and a memory 140, the memory 140 being coupled to the central processing unit 100. It should be appreciated that this figure is illustrative only, and other types of structures may also be used, so as to supplement or replace this structure and achieve a telecommunications function or other functions.

In an implementation, the functions of the cell reselection apparatus 600 may be integrated into the central processing unit 100. The central processing unit 100 may be configured to carry out the methods described in embodiments 1-3.

In another implementation, the cell reselection apparatus 600 and the central processing unit 100 may be configured separately. For example, the cell reselection apparatus 600 may be configured as a chip connected to the central processing unit 100, with its functions being realized under control of the central processing unit 100.

As shown in FIG. 7, the UE 700 may further include a communication module 110, an input unit 120, an audio processor 130, a display 160 and a power supply 170. It should be appreciated that the UE 700 does not necessarily include all the parts shown in FIG. 7, and furthermore, the UE 700 may include parts not shown in FIG. 7, and the relevant art may be referred to.

As shown in FIG. 7, the central processing unit 100 is sometimes referred to as a controller or control element, and may include a microprocessor or other processor devices and/or logic devices. The central processing unit 100 receives input and controls operations of every components of the UE 700.

The memory 140 may be, for example, one or more of a buffer memory, a flash memory, a hard drive, a mobile medium, a volatile memory, a nonvolatile memory, or other suitable devices, which may store the above planned network information and deployed network information, and may further store a program executing related information. And the central processing unit 100 may execute the program stored in the memory 140, so as to realize information storage or processing, etc. Functions of other parts are similar to those of the relevant art, which shall not be described herein any further. The parts of the UE 700 may be realized by specific hardware, firmware, software, or any combination thereof, without departing from the scope of the present disclosure.

It can be seen from the above embodiment that when a cell supports the ProSe and signal strength of the cell is greater than or equal to the predefined threshold value, the UE may reselect the cell. Hence, even though a cell with the greatest signal strength does not support ProSe, the UE can also reselect a new cell to perform ProSe.

### Embodiment 5

An embodiment of this disclosure provides a cell reselection apparatus, which is configured in UE triggered to perform ProSe and shall be described on the basis of Embodiment 4. The embodiment of this disclosure corresponds to the cell reselection method in Embodiment 2, with identical contents being not going to be described herein any further.

In this embodiment, the UE is in an idle state and camps in a cell not supporting ProSe, and only a part of cells on the same carrier support the ProSe.

In an implementation, for multiple cells on the same carrier, when a cell supports ProSe and signal strength of the cell is greater than or equal to a predefined threshold value, the cell determining unit 601 determines the cell as the cell for performing reselection.

In another implementation, the cell determining unit 601 further ranks the cells.

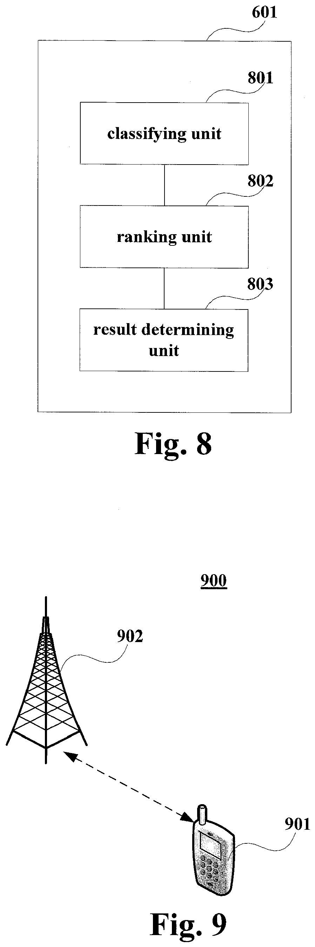

FIG. 8 is a schematic diagram of a structure of the cell determining unit of the embodiment of this disclosure. As shown in IFG. 8, the cell determining unit 601 may include:
a classifying unit 801 configured to, for cells on the same carrier, classify the cells into cells supporting the ProSe and cells not supporting the ProSe;
a ranking unit 802 configured to, for the cells supporting the ProSe, rank the cells of signal strength greater than or equal to the predefined threshold value in a sort of signal strength; and
a result determining unit 803 configured to determine the reselected cell according to the ranking result.

For example, the cell determining unit 803 may particularly be configured to determine a ranked cell with maximum signal strength as the reselected cell.

It can be seen from the above embodiment that in the case where the UE is in an idle state and camps in a cell not supporting the ProSe and only a part of cells on the same carrier support the ProSe, if the UE is triggered to perform the ProSe, when a cell supports the ProSe and signal strength of the cell is greater than or equal to the predefined threshold value, the UE reselects the cell. Hence, even though a cell with the greatest signal strength does not support ProSe, the UE can also reselect a new cell to perform ProSe.

### Embodiment 6

An embodiment of this disclosure provides a cell reselection apparatus, which is configured in UE triggered to perform ProSe and shall be described on the basis of Embodiment 4. The embodiment of this disclosure corresponds to the cell reselection method in Embodiment 3, with identical contents being not going to be described herein any further.

In this embodiment, the UE is in an idle state and camps in a cell not supporting ProSe, and only a part of cells on multiple carriers of the same priority support the ProSe.

In an implementation, for multiple cells on multiple carriers of the same priority, when a cell supports ProSe and signal strength of the cell is greater than or equal to the predefined threshold value, the cell determining unit 601 determines the cell as the cell for performing reselection.

In another implementation, the cell determining unit 601 further ranks the cells. As shown in IFG. 8, the cell determining unit 601 may include: a classifying unit 801, a ranking unit 802 and a result determining unit 803.

In this implementation, the classifying unit 801 is configured to, for multiple cells on multiple carriers of the same priority, classify the cells into cells supporting the ProSe and cells not supporting the ProSe. The ranking unit 802 is configured to, for the cells supporting the ProSe, rank the cells of signal strength greater than or equal to the predefined threshold value in a sort of signal strength. And the result determining unit 803 is configured to determine the reselected cell according to the ranking result.

For example, the cell determining unit 803 may particularly be configured to determine a ranked cell with maximum signal strength as the reselected cell.

It can be seen from the above embodiment that in the case where the UE is in an idle state and camps in a cell not supporting the ProSe and only a part of cells on the same carrier support the ProSe, if the UE is triggered to perform the ProSe, when a cell supports the ProSe and signal strength of the cell is greater than or equal to the predefined threshold value, the UE reselects the cell. Hence, even though a cell with the greatest signal strength does not support ProSe, the UE can also reselect a new cell to perform ProSe.

### Embodiment 7

An embodiment of this disclosure provides a communication system. FIG. 9 is a schematic diagram of a structure of the communication system of the embodiment of this disclosure. As shown in FIG. 9, the communication system 900 includes UE 901.

In the embodiment, when the UE 901 is triggered to perform ProSe, it determines a cell of signal strength greater than or equal to a predefined threshold value and supporting the ProSe, and reselect the cell.

In this embodiment, the UE 901 is in an idle state and camps in a cell not supporting the ProSe before performing reselection; in which one or more cells on the same carrier (such as only a part of the cells) support the ProSe; or
the UE 901 is in an idle state and camps in a cell not supporting the ProSe before performing reselection; in which one or more cells on multiple carriers of the same priority support the ProSe; for example, only a part of the cells of a carrier support the ProSe, or all cells on the carrier support the ProSe.

As shown in FIG. 9, the communication system 900 may further include:
A base station 902 configured to transmit system information to the UE; for example, the system information includes information on a cell supporting the ProSe and/or information on a carrier supporting the ProSe.

An embodiment of the present disclosure provides a computer readable program code, which, when executed in UE, will cause a computer unit to carry out the cell reselection method described in embodiments 1-3 in the UE.

An embodiment of the present disclosure provides a computer readable medium, including a computer readable program, which will cause a computer unit to carry out the cell reselection method described in embodiments 1-3 in UE.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof. And they may also be realized as a combination of computing equipment, such as a combination of a DSP and a microprocessor, multiple processors, one or more microprocessors in communication combination with a DSP, or any other such configuration.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

## Claims

1. A cell reselection method, applicable to user equipment (UE) triggered to perform proximity-based service (ProSe), the cell reselection method comprising:
determining, by the UE, a cell of signal strength greater than or equal to a predefined threshold value and supporting the ProSe; and
reselecting the cell by the UE.

2. The cell reselection method according to claim 1, wherein before determining the cell, the UE is in an idle state and camps in a cell not supporting the ProSe; and wherein one or more cells on a carrier where the camping cell is located support the ProSe.

3. The cell reselection method according to claim 2, wherein the determining by the UE a cell of signal strength greater than or equal to a predefined threshold value and supporting the ProSe comprises:
for cells on the same carrier, determining a cell as the reselected cell by the UE, when the cell supports the ProSe and the signal strength of the cell is greater than or equal to the predefined threshold value.

4. The cell reselection method according to claim 2, wherein the determining by the UE a cell of signal strength greater than or equal to a predefined threshold value and supporting the ProSe comprises:
for cells on the same carrier, classifying the cells into cells supporting the ProSe and cells not supporting the ProSe;
for the cells supporting the ProSe, ranking the cells of signal strength greater than or equal to the predefined threshold value in a sort of signal strength; and
determining the reselected cell according to the ranking result.

5. The cell reselection method according to claim 4, wherein a ranked cell with maximum signal strength is determined as the reselected cell.

6. The cell reselection method according to claim 1, wherein before determining the cell, the UE is in an idle state and camps in a cell not supporting the ProSe; and wherein part or all of cells on carriers of the same priority as the carrier where the camping cell is located support the ProSe.

7. The cell reselection method according to claim 6, wherein the determining by the UE a cell of signal strength greater than or equal to a predefined threshold value and supporting the ProSe comprises:
for cells on multiple carriers of the same priority, determining a cell as the reselected cell by the UE, when the cell supports the ProSe and the signal strength of the cell is greater than or equal to the predefined threshold value.

8. The cell reselection method according to claim 6, wherein the determining by the UE a cell of signal strength greater than or equal to a predefined threshold value and supporting the ProSe comprises:
for cells on multiple carriers of the same priority, classifying the cells into cells supporting the ProSe and cells not supporting the ProSe;
for the cells supporting the ProSe, ranking the cells of signal strength greater than or equal to the predefined threshold value in a sort of signal strength; and
determining the reselected cell according to the ranking result.

9. The cell reselection method according to claim 8, wherein a ranked cell with maximum signal strength is determined as the reselected cell.

10. The cell reselection method according to claim 1, wherein before determining the cell, the method further comprises:
receiving system information by the UE, the system information comprising information on a cell supporting the ProSe and/or information on a carrier supporting the ProSe.

11. A cell reselection apparatus, configured in UE triggered to perform ProSe, the cell reselection apparatus comprising:
a cell determining unit configured to determine a cell of signal strength greater than or equal to a predefined threshold value and supporting the ProSe; and
a cell reselecting unit configured to enable the UE to reselect the cell.

12. The cell reselection apparatus according to claim 11, wherein for cells on the same carrier, the cell determining unit is configured to determine a cell as the reselected cell, when the cell supports the ProSe and the signal strength of the cell is greater than or equal to the predefined threshold value.

13. The cell reselection apparatus according to claim 11, wherein the cell determining unit comprises:
a classifying unit configured to, for cells on the same carrier, classify the cells into cells supporting the ProSe and cells not supporting the ProSe;
a ranking unit configured to, for the cells supporting the ProSe, rank the cells of signal strength greater than or equal to the predefined threshold value in a sort of signal strength; and
a result determining unit configured to determine the reselected cell according to the ranking result.

14. The cell reselection apparatus according to claim 13, wherein the cell determining unit is configured to determine a ranked cell with maximum signal strength as the reselected cell.

15. The cell reselection apparatus according to claim 11, wherein for cells on multiple carriers of the same priority, the cell determining unit is configured to determine a cell as the reselected cell, when the cell supports the ProSe and the signal strength of the cell is greater than or equal to the predefined threshold value.

16. The cell reselection apparatus according to claim 11, wherein the cell determining unit comprises:
a classifying unit configured to, for cells on multiple carriers of the same priority, classify the cells into cells supporting the ProSe and cells not supporting the ProSe;
a ranking unit configured to, for the cells supporting the ProSe, rank the cells of signal strength greater than or equal to the predefined threshold value in a sort of signal strength; and
a result determining unit configured to determine the reselected cell according to the ranking result.

17. The cell reselection apparatus according to claim 16, wherein the result determining unit is configured to determine a ranked cell with maximum signal strength as the reselected cell.

18. A communication system, comprising:
UE configured to, when being triggered to perform ProSe, determine a cell of signal strength greater than or equal to a predefined threshold value and supporting the ProSe, and reselect the cell.

19. The communication system according to claim 18, wherein the UE is in an idle state and camps in a cell not supporting the ProSe before performing reselection;
and wherein one or more cells on a carrier where the camping cell is located support the ProSe, or part or all of cells on carriers of the same priority as the carrier where the camping cell is located support the ProSe.

20. The communication system according to claim 18, wherein the communication system further comprises:
a base station configured to transmit system information to the UE, the system information comprising information on a cell supporting the ProSe and/or information on a carrier supporting the ProSe.
